(19) Europäisches Patentamt
European Patent Office
Office européen des brevets

(11) **EP 1 317 106 A2**

(12) **EUROPEAN PATENT APPLICATION**

(43) Date of publication:
**04.06.2003 Bulletin 2003/23**

(51) Int Cl.⁷: **H04L 25/03**

(21) Application number: **02102640.6**

(22) Date of filing: **25.11.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **29.11.2001 US 997639**

(71) Applicant: **Texas Instruments Incorporated Dallas, Texas 75251 (US)**

(72) Inventor: **HUI, Yan San Diego, CA 92128 (US)**

(74) Representative: **Holt, Michael et al Texas Instruments Ltd., EPD MS/13, 800 Pavilion Drive Northampton Business Park, Northampton NN4 7YL (GB)**

(54) **Method and apparatus for data scrambling/descrambling**

(57) A modulated symbol domain data scrambling/descrambling method overcomes modulated signal non-uniform distribution problem associated with higher order M-ary QAM and M-ary PSK modulation. Since the descrambling is performed in the symbol domain, it has the flexibility to place the descrambler outside and before the QAM demapper. By doing so, it is not necessary for QAM demapper or the blocks after QAM demapper to have the knowledge of the scrambling code. The scrambling technique is also backward compatible with most of the current CDMA standards, such as IS 95 and IS-2000 standards.

FIG. 2

**Description**

TECHNICAL FIELD

This invention relates in general to the field of radio communications and more specifically to a method and apparatus for M-ary Quadrature Amplitude Modulation (QAM) and M-ary Phase Shift Keying (PSK) data scrambling/descrambling.

BACKGROUND

Data scrambling is widely used in communication systems. For example, Code Division Multiple Access (CDMA) systems use a psuedonoise (PN) sequence to scramble data in order to differentiate users or randomize the data for the purpose of reducing signal peak-to-average ratios. In the Code Division Multiple Access (CDMA) IS-2000 standard, the forward link data scrambling is done by applying a user specific long PN sequence on Binary Phase Shift Keying (BPSK) or Quadrature Phase Shift Keying (QPSK) modulated symbols. In M-ary PSK (M-PSK) or M-ary QAM modulation, the output from the modulator is a baseband representation of the modulated signal. M, is the number of points in the signal constellation. If the input is set to bit and M has the form $2^K$ for some positive integer K, then the M-ary modulation block accepts binary represntation between 0 and M-1, and output I and Q symbol pairs which represents one of the M constellation points. When BPSK or QPSK is used, scrambling on the modulated symbols is equivalent to scrambling on the bits because each bit can be uniquely mapped to an I or Q symbol. As a result, the modulated signals are uniformly distributed among the constellation points.

When the modulation order of Phase Shift Keying (PSK) is higher than 4, however, scrambling the modulated symbols does not necessarily result in a uniformly distributed constellation set. For example, when scrambling is used on 8 PSK modulated symbols, if a frame consists of a fixed 3-bit pattern, the resulting modulated signals are always among 4 out of 8 constellation points.

Modulated symbol domain scrambling for higher order QAM modulation, results in a similar problem. For example, when the information sequence consists of a fixed 4-bit pattern, scrambling on 16 QAM modulated symbols results in phase rotation only, and it only uses 4 out of 16 constellation points. Such data dependent average signal power adversely affects signal peak-to-average power, which in turn degrades receiver AGC performance. It also affects the modulated signal energy detection, which is essential to the scaling in the QAM demapper in the receiver. This effect is especially pronounced for a single user occupying multiple Walsh code channels that is widely used in a high data rate systems.

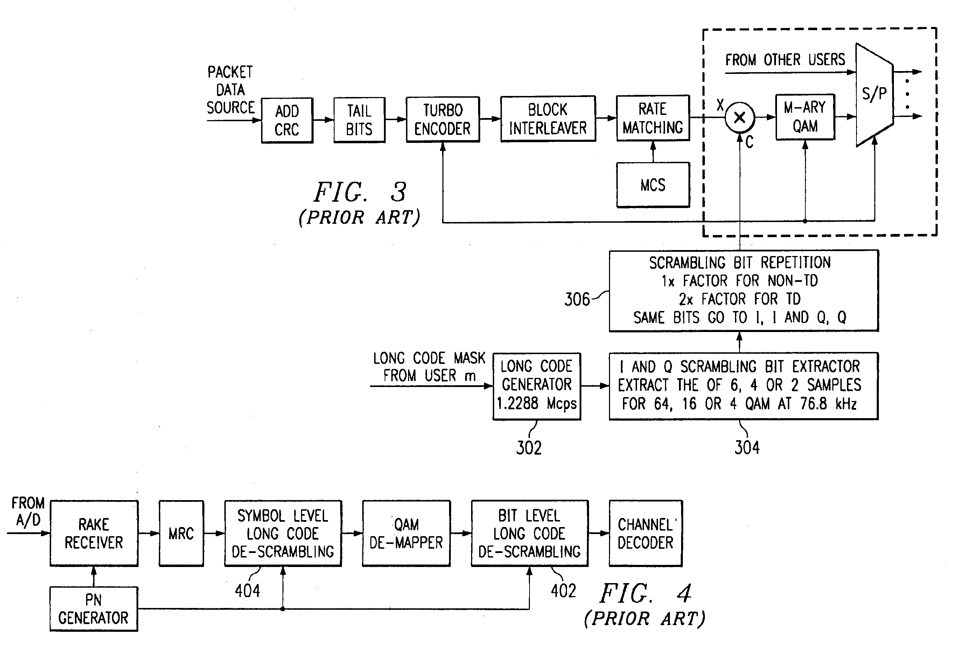

A bit level data scrambling method is proposed in the prior art to overcome the above mentioned problem. This approach adds an additional PN scrambler before the QAM mapping function to randomize the bits prior to modulation. On the receiver side, this requires an additional descrambler after the QAM demapping. As an example, FIG. 3 shows a block diagram of this prior art approach with the descrambler including blocks 302-306. In FIG. 4, there is shown a bit level descrambling block 402 together with a symbol level descrambling block 404 in the receiver as required by this prior art design. Note that block 402 could also be combined into the QAM demapper.

One disadvantage of the above mentioned prior art approach is that the data scrambler and descrambler blocks are located in the different places in this system compared to most of the current CDMA standard where the scrambling is performed on the modulated symbols, for example, IS-95 and IS-2000 standards. As a result, this prior art approach is not backward compatible with most of the current CDMA standards and it also requires additional hardware and/or software on both the transmitter and receiver. Another more implementation related issue is that the QAM mapper/demapper blocks, which previously do not have to have the knowledge of long PN code, have to know the long PN code now in order to perform bit level de-scrambling. This could increase the implementation complexity significantly. A need thus exists in the art for a method and apparatus that can overcome some of the problems mentioned above.

BRIEF DESCRIPTION OF THE DRAWINGS

The features of the present invention, which are believed to be novel, are set forth with particularity in the appended claims. The invention, may best be understood by reference to the following description, taken in conjunction with the accompanying drawings, in the several figures of which like reference numerals identify like elements, and in which:

FIG. 1 is a block diagram of a transmitter using the data scrambling technique in accordance with the invention.
FIG. 2 is a block diagram of a receiver using the data descrambling technique in accordance with the invention.
FIG. 3 is block diagram of a prior art transmitter using a bit level scrambling technique.

FIG. 4 is a block diagram of a prior art receiver using a bit level descrambling technique.
FIG. 5 illustrates a 16 QAM constellation with Gray mapping in accordance with the invention.
FIG. 6 illustrates a 64 QAM constellation with Gray mapping in accordance with the invention.
FIG. 7 illustrates still another 16 QAM constellation with Gray mapping in accordance with the invention.

## DETAILED DESCRIPTION OF THE PREFERRED EMBODIMENT

While the specification concludes with claims defining the features of the invention that are regarded as novel, it is believed that the invention will be better understood from a consideration of the following description in conjunction with the drawing figures.

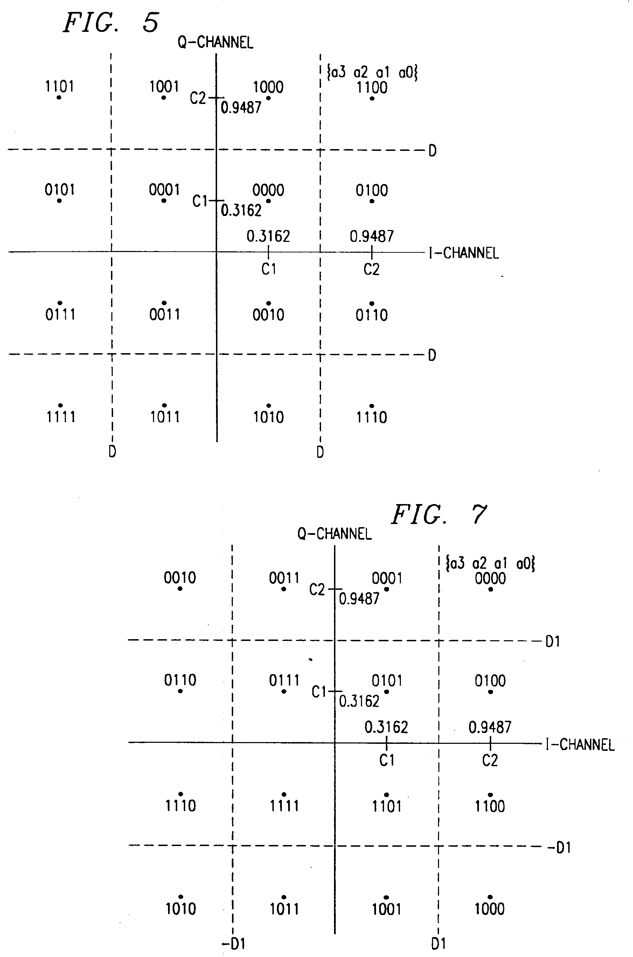

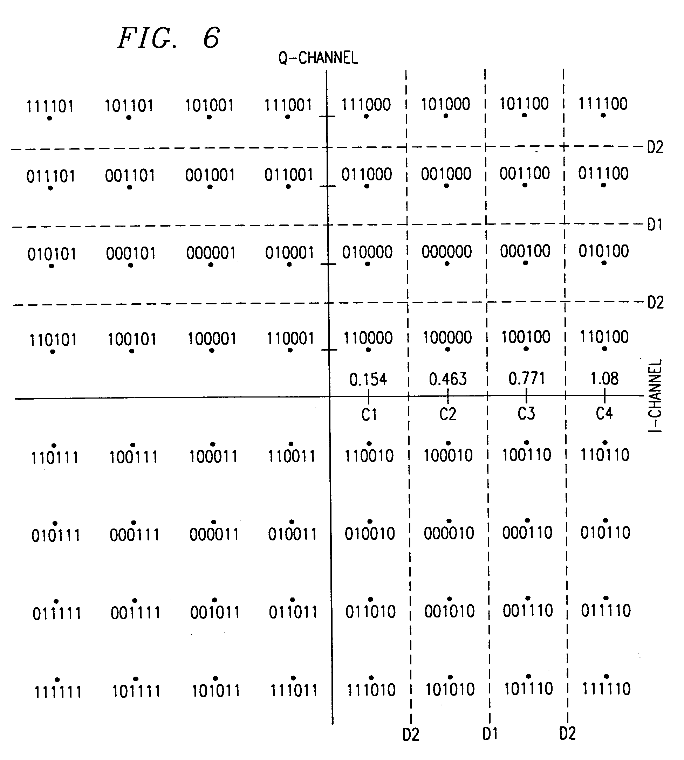

Since there is no one-to-one mapping between each information bit, and I or Q symbol when the modulation order is greater than 4, scrambling in the symbol domain is not equivalent to that in the bit domain. This may result in non-uniform distribution of the modulated signal when I and Q are scrambled in the symbol domain. To make symbol domain and bit domain scrambling equivalent, more scrambling operations are required, instead of only scrambling I or Q using a 1 bit code. This can be done by exploring the symmetry of a Gray coded constellation. FIGs 5 and 6 show Gray coded constellations of 16 and 64 QAM, respectively. Taking 16 QAM as an example, the bit sequence for a given constellation point {I, Q} can be represented as {a3 a2 a1 a0}, $D_1 = (C_1 + C_2)/2$ with $C_2 = 3C_1$.

For a given 4-bit scrambling code {s3 s2 s1 s0}, scrambling in the symbol domain can be done as follows in accordance with the invention:

1. **If $s_0 = 1, I = -I$, else $I = I$**

2. **If $s_1 = 1, Q = -Q$, else $Q = Q$**

3. **If $s_2 = 1$,**
   **if $0 \leq |I| < 2D_1, I = sign(I) * |2D_1 - |I||$;**
   **else $I = I$.**

4. **If $s_3 = 1$,**
   **if $0 \leq |Q| < 2D_1, Q = sign(Q) * |2D_1 - |Q||$;**
   **else $Q = Q$.**

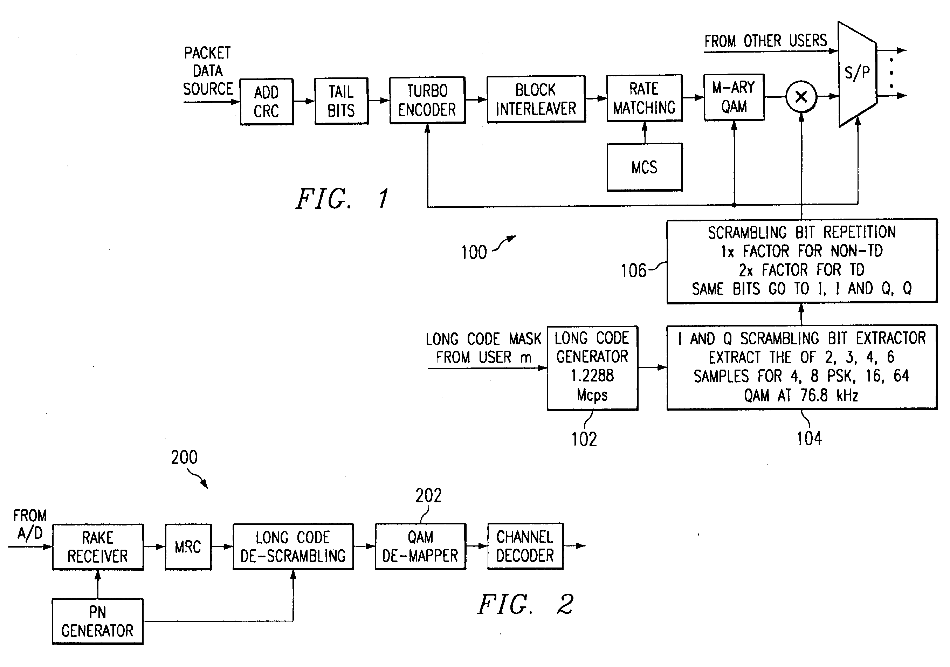

In FIG. 1 there is shown a transmitter 100 that performs the data scrambling technique shown above. A long code mask from a particular user (m) is sent to a long code generator 102 which produces the long code that is sent to the I and Q scrambling bit extractor 104. The output from the I and Q scrambling bit extractor 104 is sent to block 106 where scrambling bit repetition using 1X factor for non-time delay (TD) and 2X factor for time delay (TD) with the same bits going to I, I and Q, Q.

Descrambling can be done by using exactly the same algorithm as above with {I, Q} representing the received signal, and the descrambled {I, Q} being the input to the demapper 202 as shown in the block diagram of a receiver 200 in FIG. 2 in accordance with the invention. Here, a very simple method is used in the receiver before applying the above de-scrambling algorithm to limit the abnormally large symbol magnitude caused by the channel variation and noise:

$$\text{If } 2D_1 \leq |I|, I = sign(I) * |2D_1 - \Delta|, \text{ if } 2D_1 \leq |Q|, I = sign(Q) * |2D_1 - \Delta|,$$

**where $\Delta$ is a small non - negative number.**
The value of $\Delta$ is chosen depending on the particular system design requirments, in the preferred embodiment, $\Delta$ is in the range from 0 to 0.05, but can be outside this range depending on the particular system requirments. Some other algorithms may be used for the same purpose.
It should also be noted that a normolization algorithm is needed to scale the receiving symbols properly for a fixed D value. An alternative is to scale D according to the receiving signal energy. In all the cases mentioned above, the proposed scrambling method is always applicable.

For 64 QAM modulation, a similar algorithm can be derived in acccordance with the invention. In an illustrative example, let $D_1 = (C_2 + C_3)/2$ and $D_2 = (C_1 + C_2)/2$. Note that $D_1 = 2D_2, C_2 = 3C_1, C_3 = 5C_1$. A modulated symbol {I, Q} represents 6-bit sequence {a5 a4 a3 a2 a1 a0} and can be scrambled by {s5 s4 s3 s2 s1 s0} as follows:

1. **If $s_0 = 1, I = -I$, else $I = I$**

2. If $s_1 = 1, Q = -Q$, else $Q = Q$

3. If $s_2 = 1$,

    if $0 \leq |I| < 2D_1, I = sign(I) * |2D_1 - |I||$;

  else $I = I$.

4. If $s_3 = 1$,

    if $0 \leq |Q| < 2D_1, Q = sign(Q) * |2D_1 - |Q||$;

  else $Q = Q$.

5. If $s_4 = 1$,

    if $0 \leq |I| < D_1, I = sign(I) * |D_1 - |I||$;

    if $D_1 \leq |I| < 2D_1, I = sign(I) * |3D_1 - |I||$;

  else $I = I$.

6. If $s_5 = 1$,

    if $0 \leq |Q| < D_1, Q = sign(Q) * |D_1 - |Q||$;

    if $D_1 \leq |Q| < 2D_1, Q = sign(Q) * |3D_1 - |Q||$;

  else $Q = Q$.

Again, descrambling can be done by using the exact same algorithm as above with {I, Q} representing the received signal, and descrambled {I, Q} being the input to the demapper. Again, the following algorithm is used before the de-scrambling to limit the abnormally large symbol magnitude caused by the channel variation and noise:

$$\text{If } 2D_1 \leq |I|, I = sign(I) * |2D_1 - \Delta|, \text{if } 2D_1 \leq |Q|, I = sign(Q) * |2D_1 - \Delta|,$$

**where $\Delta$ is a small non - negative number.**

Extension to other orders of PSK and QAM modulation is straightforward. The algorithm presented above can be easily extended to the M-PSK or M-QAM modulations using other Gray mapping other than the one we used here.

A generic formula for the above examples that covers the different modulation levels can be gnerated. For the Gray mapping used in the constellation shown above, data scrambling or descrambling modulated signals, where S represents Q symbols with "i" being odd and I symbols with "i" being even (or revere condition where I symbols are with "i" being even and Q symbols with "i" being odd). A generic formula for i = 0 to 7 (128 QAM with i = 0 to 7) and which can be extended for larger values of "i" (i.e., higher number of modulations) is as follows:

1. If $s_i = 1$, for $i = 0, 1$,

    $S = -S$,

  else $S = S$;

2. If $s_i = 1$, for $i \geq 2$

    if $A \leq |S| < B$, $I = sign(S) * |(A + B) - |S||$;

  else $S = S$.

Where:

A = 0, B = $2D_1$ for i = 2, 3;

A = 0, B = $D_1$, and A= $D_1$, B = 2 $D_1$ for i = 4, 5;

A = 0, B = $D_1/2$, A= $D_1/2$, B = $D_1$, A= $D_1$, B = $3D_1/2$, A = $3D_1/2$, B = $2D_1$ for i = 6, 7, etc.

On the receiver side, the following algorithm is used before the de-scrambling to limit the abnormally large symbol magnitude caused by the channel variation and noise:

If $B \leq |S|$, $S = sign(S) * |B - \Delta|$, where $\Delta$ is a small non-negative number.

In order to better understand the present invention, a further illustrative example is provided. If a bit stream on the transmitter side is {a3 a2 a1 a0} = {1 1 0 0} and the scrambling code is {1 1 1 1}. After QAM mapping, {I Q} = {0.9487, 0.9487}. Scrambling is performed according to the following steps:

1. $s_0 = 1, I = -I = -0.9487$

2. $s_1 = 1, Q = -Q = -0.9487$

3. $s_2 = 1, I = sign(I) * \|2D_1 - |I|\| = -0.3162$

4. $s_3 = 1, Q = sign(Q) * \|2D_1 - |Q|\| = -0.3162$

Therefore, the transmitted signal is {I Q} = {-0.3162, -0.3162}. If the signal is corrupted by additive noise n = {0.1, -0.15} in the channel, the received signal becomes {I Q} = {-0.2162, - 0.4662}. Since the signal magnitude is not larger than the threshold$2D_1$ , the signal can be de-scrambled as:

1. $s_0 = 1, I = -I = 0.2162$

2. $s_1 = 1, Q = -Q = 0.4662$

3. $s_2 = 1, I = sign(I) * \|2D_1 - |I|\| = 1.0487$

4. $s_3 = 1, Q = sign(Q) * \|2D_1 - |Q|\| = 0.9787$

{I Q} = {1.0487, 0.9787} is the input signal to the QAM demapper. If a hard-decision is applied, the demapped sequence is {1 1 0 0}, which is what was transmitted.

It can be observed that the scrambling in the symbol domain is equivalent to scrambling in the bit domain, i. e. {1 1 0 0}xor{1 1 1 1} = { 0 0 1 1}, which is mapped to {I Q} = {-0.3162, -0.3162}. Since descrambling is performed in the symbol domain in accordance with the invention, hence it is not necessary to have an extra bit level de-scrambling block; or, for the QAM demapper to have the knowledge of scrambling code if the de-scrambling is done in the demapping process.

In another Gray mapping constellation alternate embodiment of the invention, i is associated with I when i = 0,..., log2(M)/2-1 and associated with Q when i = log2(M)/2,..., log2(M)-1. A 16 QAM constellation using such Gray mapping is shown in FIG 7, and the de-scrambling algorithm is as follows

1. **If $s_i = 1$, $i = 1,3$**
         **$S = -S,$**
      **else $S = S$**
2. **If $s_i = 1, i = 2,4$**
            **if A $\leq |S| < B, I = sign(S) * \|(A + B) - |S|\|$;**
      **else $S = S$.**

Where **$A = 0, B = 2D_1$.** On the receiver side, similar algorithm as before can be used to limit abnormally large symbol magnitude caused by the channel variation and noise. Similarly, i can be associated Q when i = 0,..., log2(M)/2-1 and associated with I when i = log2(M)/2,..., log2(M)-1. This can also be extended to larger i's, i.e. higher order of modulations.

The present invention provides for a modulated symbol domain data scrambling/descrambling method that overcomes the modulated signal non-uniform distribution problems associated with higher order M-ary QAM and M-ary PSK modulation. It also provides the flexibility of placing the descrambler outside the QAM demapper, and provides the advantage that it is backward compatible to the standards with symbol level scrambling, such as interim specifications (IS) IS-95 and IS-2000.

While the preferred embodiments of the invention have been illustrated and described, it will be clear that the invention is not so limited. Numerous modifications, changes, variations, substitutions and equivalents will occur to those skilled in the art without departing from the spirit and scope of the present invention as defined by the appended claims.

**Claims**

**1.** A method for data scrambling or descrambling modulated signals, where $s_i$ represents the scrambling code, S represents Q symbols with i being odd and I symbols with i being even, comprising the steps of:

(a) if de-scrambling the modulated signals and if $B \leq |S|$, then $S = \text{sign} (S) *|B - \Delta|$, where $\Delta$ is a small non-negative number,
(b) determining **if $s_i$ =1, for $i$ = 0,1,** if i>1 skip to step (d);
(c) setting S = -S if in step (a) $s_i$ = 1, else setting S = S; and
(d) determining if $s_i$ = 1, for i $\geq$ 2 and
if $A \leq |S| < B$,

$$\text{letting } S = \text{sign} (S) * |(A + B) - |S||, \text{ else } S = S; \text{ and}$$

where:

A = 0, B = $2D_1$ for i = 2, 3;
A = 0, B = $D_1$, and A= $D_1$, B = $2 D_1$ for i = 4, 5;
A = 0, B = $D_1/2$; A= $D_1/2$, B = $D_1$; A= $D_1$, B = $3D_1/2$; A = $3D_1/2$, B = $2D_1$, for i = 6, 7, etc.

**2.** A method for data scrambling or de-scrambling modulated signals, where $s_i$ represents the scrambling code, S represents Q symbols with i being even and I symbols with i being odd, comprising the steps of:

(a) if de-scrambling the modulated signals and
if $B \leq |S|$, then $S = \text{sign} (S) *|B - \Delta|$, where $\Delta$ is a small non-negative number,
(b) determining **if $s_i$ =1, for $i$ = 0,1 ,** if i>1 skip to step (d);
(c) setting S = -S if in step (a) $s_i$ = 1, else setting S = S;
(d) determining if $s_i$ = 1, for i $\geq$ 2 and

if $A \leq |S| < B$,

$$\text{letting } S = \text{sign} (S) * |(A + B) - |S||, \text{ else } S = S; \text{ and}$$

where:

A = 0, B = $2D_1$ for i = 2, 3;
A = 0, B = $D_1$, and A= $D_1$, B = $2 D_1$ for i = 4, 5;
A = 0, B = $D_1/2$; A= $D_1/2$, B = $D_1$; A= $D_1$, B = $3D_1/2$; A = $3D_1/2$, B = $2D_1$, for i = 6, 7, etc.

**3.** A method for data scrambling or descrambling modulated signals, where $s_i$ represents the scrambling code, S represents I symbols when i = 0,..., log2(M)/2-1 and associated with Q symbols when i = log2(M)/2,..., log2(M)-1, comprising the steps of:

(a) if de-scrambling the modulated signals and
if $B \leq |S|$, then $S = \text{sign} (S) *|B - \Delta|$, where $\Delta$ is a small non-negative number,
(b) determining if $s_i$ = 1for **$i$=1,3;**
(c) setting S = -S if $s_i$ = 1, else setting S = S;
(d) determining if $s_i$ = 1 for i = 2,4 and

if also $A \leq |S|< B$, then $S = \text{sign} (S) * |(A + B) - |S||$, else S = S; and
where: A = 0 and B = $2D_1$.

**4.** A method for data scrambling or descrambling modulated signals, where $s_i$ represents the scrambling code, S represents Q symbols when i = 0,..., log2(M)/2-1 and associated with I symbols when i = log2(M)/2,..., log2(M)-1, comprising the steps of:

(a) if de-scrambling the modulated signals and
if $B \leq |S|$, then $S = \text{sign} (S) *|B - \Delta|$, where $\Delta$ is a small non-negative number,
(b) determining if $s_i$ = 1for **$i$=1,3;**

(b) setting S = -S if $s_i$ = 1, else setting S = S;
(c) determining if $s_i$ = 1 for i = 2,4 and if also A $\leq$ |S|< B, then

$$S = \text{sign } (S) * |(A + B) - |S||, \text{ else } S = S; \text{ and}$$

where: A = 0 and B = $2D_1$.

**5.** A receiver for data descrambling modulated signals, where $\boldsymbol{s_i}$ represents the scrambling code, S represents Q symbols with i being odd and I symbols with i being even, comprising:

a rake receiver; and
a data descrambler coupled to the rake receiver, the data descrambler performing the steps of:

(a) if B $\leq$|S|, then S = sign (S) *|B - $\Delta$|, where $\Delta$ is a small non-negative number,
(b) determining **if $s_i$ = 1, for $i$ = 0,1** , if i>1 skip to step (d);
(c) setting S = -S if in step (a) $s_i$ = 1, else setting S = S;
(d) determining if $s_i$ = 1, for i $\geq$ 2 and

if A $\leq$ |S| < B,

$$\text{letting } S = \text{sign } (S) * |(A + B) - |S||, \text{ else } S = S; \text{ and}$$

where:

A = 0, B = $2D_1$ for i = 2, 3;
A = 0, B = $D_1$, and A= $D_1$, B = 2 $D_1$ for i = 4, 5; and
A = 0, B = $D_1$/2; A= $D_1$/2, B = $D_1$; A= $D_1$, B = $3D_1$/2; A = $3D_1$/2, B = $2D_1$, for i = 6, 7, etc.

**6.** A receiver for data descrambling modulated signals, where $\boldsymbol{s_i}$ represents the scrambling code, S represents Q symbols with i being even and I symbols with i being odd, comprising:

a rake receiver; and
a data desrambler coupled to the rake receiver, the data descrambler performing the steps of:

(a) if B $\leq$|S|, then S = sign (S) *|B - $\Delta$|, where $\Delta$ is a small non-negative number,
(b) determining **if $s_i$ = 1, for $i$ = 0,1,** if i>1 skip to step (d);
(c) setting S = -S if in step (a) $s_i$ = 1, else setting S = S;
(d) determining if $s_i$ = 1, for i $\geq$ 2 and

if A $\leq$ |S| < B,

$$\text{letting } S = \text{sign } (S) * |(A + B) - |S||, , \text{ else } S = S; \text{ and}$$

where:

A = 0, B = $2D_1$ for i = 2, 3;
A = 0, B = $D_1$, and A= $D_1$, B = 2 $D_1$ for i = 4, 5; and
A = 0, B = $D_1$/2; A= $D_1$/2, B = $D_1$; A= $D_1$, B = $3D_1$/2; A = $3D_1$/2, B = $2D_1$, for i = 6, 7, etc.

## FIG. 1

PACKET DATA SOURCE → ADD CRC → TAIL BITS → TURBO ENCODER → BLOCK INTERLEAVER → RATE MATCHING → M-ARY QAM → ⊗ → S/P →

FROM OTHER USERS

MCS

100

106 — SCRAMBLING BIT REPETITION
1x FACTOR FOR NON-TD
2x FACTOR FOR TD
SAME BITS GO TO I, I AND Q, Q

LONG CODE MASK FROM USER m → LONG CODE GENERATOR 1.2288 Mcps → I AND Q SCRAMBLING BIT EXTRACTOR EXTRACT THE OF 2, 3, 4, 6 SAMPLES FOR 4, 8 PSK, 16, 64 QAM AT 76.8 kHz

102

104

## FIG. 2

200

FROM A/D → RAKE RECEIVER → MRC → LONG CODE DE-SCRAMBLING → QAM DE-MAPPER → CHANNEL DECODER →

202

PN GENERATOR

8

FIG. 3
(PRIOR ART)

FIG. 4
(PRIOR ART)

## FIG. 5

Q-CHANNEL

{a3 a2 a1 a0}

1101

1001  C2
0.9487

1000

1100

— — — — — — — — — — — — — D

0101

0001  C1
0.3162

0000

0100

0.3162  0.9487

I-CHANNEL

C1  C2

0111

0011

0010

0110

— — — — — — — — — — — — — D

1111

1011

1010

1110

D  D

## FIG. 7

Q-CHANNEL

{a3 a2 a1 a0}

0010

0011  C2
0.9487

0001

0000

— — — — — — — — — — — — — D1

0110

0111  C1
0.3162

0101

0100

0.3162  0.9487

I-CHANNEL

C1  C2

1110

1111

1101

1100

— — — — — — — — — — — — — -D1

1010

1011

1001

1000

-D1  D1

FIG. 6